# EUROPEAN PATENT APPLICATION

(11) **EP 4 818 363 A1**
(43) Date of publication of application: **07.10.2026**
(21) Application number: 25167304.2
(22) Date of filing: 31.03.2025
(51) Int. Cl.: C25B 1/04, C25B 9/70, H02J 15/00

(54) **MULTIPOWERED ELECTROLYSIS FACILITY**

(71) Applicant: Siemens Energy Global GmbH & Co. KG, 81739 München (DE)
(72) Inventor: Do, Nga Thi Quynh, 91056 Erlangen (DE)

(57) **Abstract**

A multipowered electrolysis facility (2) having a power balance unit (6) that receives incoming power from a power source (4) and manages electron flow (8) from the power source (4); a first electrolysis unit (10) that receives the managed electron flow (8) from the power balance unit (6), and is individually attuned and cooperatively integrated to operate at a first power range of 10-500 MW; a second electrolysis unit (12) that receives the managed electron flow (8) from the power balance unit (6), and is individually attuned and cooperatively integrated to operate at a second power range of 10-500 MW; a cooling/heating unit (20) operatively connected to the electrolysis units (10, 12) to provide coolant/heated flow from the cooling/heating unit (20) to the electrolysis units (10, 12) for efficient electrolysis within the electrolysis units (10, 12); and a fluid purification unit (30) operatively connected to the electrolysis units (10, 12) to provide purified fluid flow from the purification unit (30) to the electrolysis units (10, 12) for efficient electrolysis within the electrolysis units (10, 12), whereby the electrolysis units (10, 12) produce hydrogen (40) and oxygen (42) that each may be made use of, stored, transported, discarded or otherwise.

## Description

### BACKGROUND

### 1. Field

The present invention relates in general to a multipowered electrolysis facility, and more specifically to an electrolysis facility having a plurality of electrolysis units individually attuned and cooperatively integrated to enable the electrolysis facility to safely and efficiently utilize a wide range of incoming power sources including renewable power sources.

### 2. Description of the Related Art

Electrolysis for green hydrogen production plays a transformative role for achieving climate neutrality. Electrolysis is crucial for green energy production because it enables the creation of 'green' hydrogen, a clean fuel source, by splitting water molecules into hydrogen and oxygen using electricity from renewable sources like wind, solar, hydro and geothermal. This results in zero greenhouse gas emissions when produced and used, making it a key technology for decarbonizing various traditionally dirty sectors like transportation and industry.

Electrolysis is a leading hydrogen production pathway to achieve the Hydrogen Energy Earthshot goal of reducing the cost of clean hydrogen by 80% to $1 per 1 kilogram by in 1 decade, by 2031 ("1 1 1"), per the US Department of Energy Hydrogen and Fuel Cell Technologies Office. The Office has further noted that hydrogen produced via electrolysis can result in zero greenhouse gas emissions, depending on the source of the electricity used, but that the electricity source, including its safety and efficiency, must be considered when evaluating the benefits and economic viability of hydrogen production via electrolysis. Further, in many regions, the existing power grid is not ideal for providing the electricity required for electrolysis because of the greenhouse gases released and the amount of fuel required due to the low efficiency of the electricity generation process. Thus, hydrogen production via electrolysis powered by renewable energy sources e.g. wind, solar, hydro, geothermal, is an increasingly attractive option, as they can result in virtually zero greenhouse gas and criteria pollutant emissions. However, the production costs of hydrogen production via electrolysis powered by renewable energy sources needs to be decreased significantly to be competitive with more mature carbon-based pathways such as natural gas reforming. Moreover, various technical issues need to be identified and resolved.

Electrolysis reaction typically take place in an electrolyzer. Electrolyzers can range in size from small, appliance-size equipment suited for small-scale distributed hydrogen production, to large-scale central production facilities that can be tied (directly or after storage) to renewable or other non-greenhouse-gas-emitting forms of electricity production. Electrolysis cost requirements often dictate using pressurized electrolysis to optimize the CAPEX/OPEX of the overall system. However, pressurized electrolysis typically poses a greater safety risk when operating at lower current density (lower power range) due to higher gas crossover. Thus, the overall flexibility of the entire alkaline electrolysis process is greatly reduced, making it difficult to match directly with fluctuated renewable energy sources.

There is thus a need for an electrolysis facility that can safely and efficiently utilize a wide range of incoming power sources including renewable power sources. There is a further need for an electrolysis facility having a plurality of electrolysis units individually attuned and cooperatively integrated to enable the electrolysis facility to safely and efficiently utilize a wide range of incoming power sources including renewable power sources.

### SUMMARY

In an aspect of the subject matter of the invention, a multipowered electrolysis facility 2 having a power balance unit 6 that receives incoming power from a power source 4 and manages electron flow 8 from the power source 4; a first electrolysis unit 10 that receives the managed electron flow 8 from the power balance unit 6, and is individually attuned and cooperatively integrated to operate at a first power range of 10-500 MW that may be a narrower 35-250 MW depending on the electrolysis unit 2 and desired use; a second electrolysis unit 12 that receives the managed electron flow 8 from the power balance unit 6, and is individually attuned and cooperatively integrated to operate at a second power range of 10-500 MW that may be a narrower 35-250 MW depending on the electrolysis unit 2 and desired use; a cooling/heating unit 20 operatively connected to the electrolysis units 10, 12 to provide coolant/heated flow from the cooling/heating unit 20 to the electrolysis units 10, 12 for efficient electrolysis within the electrolysis units 10, 12; and a fluid purification unit 30 operatively connected to the electrolysis units 10, 12 to provide purified fluid flow from the purification unit 30 to the electrolysis units 10, 12 for efficient electrolysis within the electrolysis units 10, 12, whereby the electrolysis units 10, 12 produce hydrogen 40 and oxygen 42 that each may be made use of, stored, transported, discarded or otherwise employed.

In another aspect of the subject matter of the invention, the first electrolysis unit 2 is a PEM electrolyzer and the second electrolysis unit is an alkaline electrolyzer. Utilizing a PEM electrolyzer with an alkaline or other suitable electrolyzer provides excellent flexibility and stability as well as safety and efficiency for overall the electrolysis unit 2.

These and other features, aspects and advantages of the present invention will become better understood with reference to the following drawings, description and claims.

### BRIEF DESCRIPTION OF THE DRAWINGS

The invention is shown in more detail by help of figures. The figures show preferred configurations and do not limit the scope of the invention.
FIG 1 is a schematic of a multipowered electrolysis facility in accordance with an exemplary embodiment of the subject matter.
FIG 2 is a schematic of another multipowered electrolysis facility in accordance with an exemplary embodiment of the subject matter.
FIG 3 is a schematic of another multipowered electrolysis facility in accordance with an exemplary embodiment of the subject matter.

### DETAILED DESCRIPTION

In the following detailed description of the subject matter and of the present invention, reference is made to the accompanying drawings that form a part hereof, and in which is shown by way of illustration, and not by way of limitation, specific aspects and embodiments by which the invention may be practiced. It is to be understood that other aspects and embodiments may be utilized and that changes may be made without departing from the spirit and scope of the subject matter or the present invention.

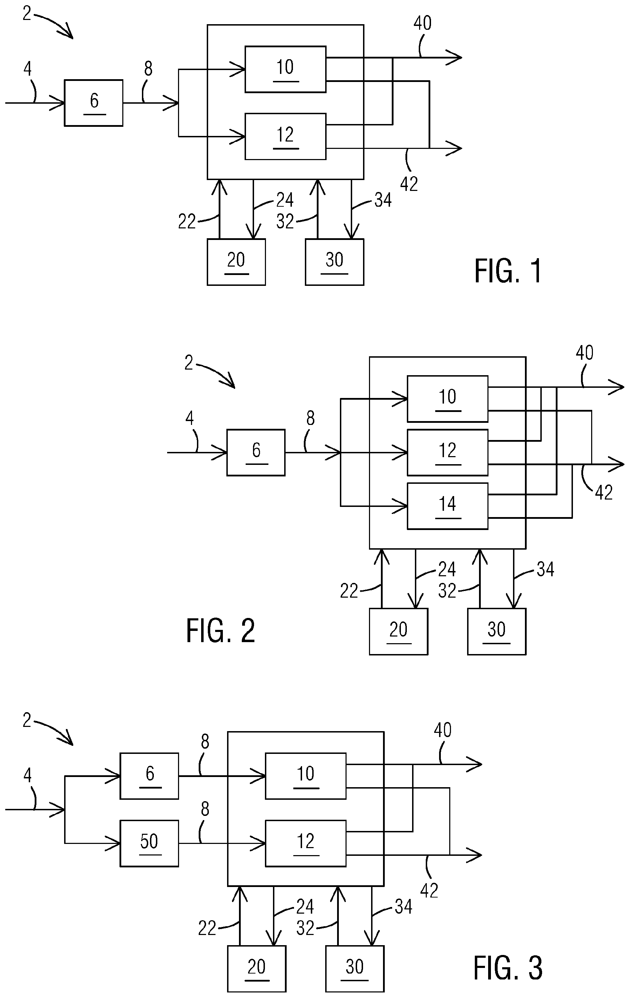

Referring to FIG 1, in an aspect of the subject matter of the invention, an electrolysis facility 2 having a plurality of electrolysis units 10, 12 is provided. The electrolysis units 10, 12 are individually attuned and cooperatively integrated to enable the electrolysis facility 2 to safely and efficiently utilize a wide range of incoming power sources 4 including renewable power sources. The individual attunement involves selecting a first electrolysis unit 10 in consideration of electrolysis safety (reduced gas crossover) and efficiency at a first power range and selecting a second electrolysis unit 12 in consideration of electrolysis safety (reduced gas crossover) and efficiency at a second power range. The cooperative integration involves directing a power source 4 incoming the electrolysis facility 2 to the electrolysis unit 10, 12 which can safely and efficiency operate at that incoming power level. By this configuration, the electrolysis facility 2 can safely and efficiently utilize a wide range of incoming power sources 4. The electrolysis facility 2 may further include a cooling/heating unit 20 and a fluid purification system 30.

The illustrated electrolysis facility 2 is operatively connected to power source 4. The power source 4 may be a local, national or other power grid powered by fossil fuel sources like gas and steam turbines as well as renewable sources like wind, solar, hydro and geothermal. The power source 4 may form into a single power line or comprise a plurality of power lines from different sources having different currents or voltages. For example, the power source 4 may be a power line carrying power from a national power grid and a separate power line carrying power from a local renewable power source.

A power balance unit 6, which may be or include a transformer, converter, thyristor or IGBT receives incoming power from the power source 4 and manages power e.g. electron flow 8 from the incoming power source 4. The power balance unit 6 converts the electron flow 8 into various electron output flows (e.g. current, voltage) according to the requirements or capabilities of each electrolysis unit 10, 12 or the electrolysis facility 2. The illustrated power balance unit 6 is configured as a global unit, however, the power balance unit 6 be configured as a distributed unit to accommodate each electrolysis unit 10, 12 in a more dedicated manner.

A first electrolysis unit 10 receives power from the power balance unit 6 in consideration of its requirements or capabilities. The first electrolysis unit 10 is individually attuned and cooperatively integrated with the electrolysis facility 2. The illustrated first electrolysis unit 10 is selected for safe (reduced gas crossover) and efficient electrolysis while providing stable electrolysis at a first power range of 10-500 MW, although the first power range may be a narrower 35-250 MW depending on the electrolysis unit 2 and desired use. A suitable first electrolysis unit 10 includes a proton exchange membrane (PEM) electrolyser.

A second electrolysis unit 12 receives power from the power balance unit 6 in consideration of for its requirements or capabilities. The second electrolysis unit 12 is individually attuned and cooperatively integrated with the electrolysis facility 2. The illustrated second electrolysis unit 10 is selected for safe (reduced gas crossover) and efficient electrolysis while providing flexible electrolysis at a second power range of 10-500 MW, although the second power range may be a narrower 35-250 MW depending on the electrolysis unit and desired use. A suitable second electrolysis unit 10 includes an alkaline electrolyser. Other suitable second electrolysis units 10 include PEM, ambient alkaline, and anion exchange membrane.

A cooling/heating unit 20 is operatively connected to the electrolysis units 10, 12 to cool/heat the electrolysis units 10, 12 for safe and efficient electrolysis reaction within the electrolysis units 10, 12. An entry conduit 22 provides coolant/heated fluid flow from the cooling/heating unit 20 to the electrolysis units 10, 12 and an exit conduit 24 returns heated/cooled fluid flow from the electrolysis units 10, 12 to the cooling/heating unit 20. The heat exchanger type may be shell-tube, plate, etc.

A fluid purification unit 30 is operatively connected to the electrolysis units 10, 12 to provide purified fluid (typically water) to the electrolysis units 10, 12 for safe and efficient electrolysis reaction within the electrolysis units 10, 12, by removing cations that can degrade the catalysts, reduce ohmic resistance and reduce faraday efficiency. An inlet conduit 32 provides purified fluid flow from the purification unit 30 to the electrolysis units 10, 12 and an outlet conduit 34 returns impure fluid flow from the electrolysis units 10, 12 to the fluid purification unit 30.

In operation, incoming power from the power source 4 is received and managed by the power balance unit 6. The managed electron flow 8 is then directed to the electrolysis units 10, 12 as appropriate based on the requirements or capabilities of the electrolysis units 10, 12 and electrolysis facility 2. The cooling/heating unit 20 loops heated/cooled fluid through the electrolysis units 10, 12 for efficient electrolysis within the electrolysis units 10, 12. The fluid purification unit 30 loops purified fluid through the electrolysis units 10, 12, for efficient electrolysis within the electrolysis units 10, 12. By this configuration, the electrolysis units 10, 12 produce hydrogen 40 (often a desired electrolysis product) and oxygen 42 that each may be made use of, stored, transported, discarded or otherwise employed.

Referring to FIG 2, an alternative embodiment of a multipowered electrolysis facility in accordance with an exemplary embodiment of the subject matter is provided. An additional electrolysis unit 14 is employed. The additional electrolysis unit 14 may be the same as or similar to the first electrolysis unit 10 (i.e. individually attuned and cooperatively integrated for safe and efficient electrolysis at a first power range of 100-1,000 MW), where the power source 4 has a higher current or voltage such as from fossil fuel sources like gas and steam turbines. The additional electrolysis unit 14 may be the same as or similar to the second electrolysis unit 12 (i.e. individually attuned and cooperatively integrated for safe and efficient electrolysis at a second power range of 10-100 MW), where the power source 4 has a lower current or voltage such as from renewable sources like wind, solar, hydro and geothermal. The additional electrolysis unit 14 may also be different than the first and second electrolysis units 10,12 (i.e. individually attuned and cooperatively integrated for safe and efficient electrolysis at a third power range higher (e.g. 500-10,000 MW), lower (e.g. 1-10 MW), or between (e.g. 10-500 MW) the power ranges of the first and second electrolysis units 10, 12. Additionally, a plurality of additional electrolysis units 14 may be used with the electrolysis facility 2, depending on a variety of factors such as desired level of electrolysis unit attunement, incoming power amount, incoming power range, desired electrolysis output, cost, etc.

Referring to FIG 3, an alternative embodiment of a multipowered electrolysis facility in accordance with an exemplary embodiment of the subject matter is provided. An additional power balance unit 50 is employed. The additional power balance unit 50 may be the same as or similar to the power balance unit 6, which may be or include a converter, thyristor or IGBT to receive incoming power from the power source 4 and manage power e.g. electron flow 8 from the incoming power source 4. The additional power balance unit 6 provides dedicated conversion of the electron flow 8 into electron output flow (e.g. current, voltage) according to the requirements or capabilities of one electrolysis unit 12. Additionally, a plurality of additional power balance units 50 may be used with the electrolysis facility 2, depending on a variety of factors such as desired level of dedicated electron flow 8 conversion, incoming power amount, incoming power range, desired electrolysis output, etc.

Another benefit of the electrolysis system 2 may further include flexible adaption of the electrolysis plant 2 by accommodating fluctuations of renewable energy and increasing utilization of green energy and hydrogen production. Another benefit of the electrolysis system 2 may further include reduced degradation of the electrolysis plant 2 by reducing hard shutdowns. Another benefit of the electrolysis system 2 may further include operational safety of the electrolysis plant 2 by reducing partial power operation of the electrolysis units 10, 12, 14. Another benefit of the electrolysis system 2 may further include lowering the cost to produce hydrogen by requiring fewer compression stages, lowering capital expenditures and ensuring reliable electrolysis operation.

While specific exemplary embodiments and illustrations have been described in detail, those with ordinary skill in the art will appreciate that various modifications and alternative to those details could be developed in light of the overall teachings of the disclosure. Accordingly, the particular arrangements disclosed are meant to be illustrative only and not limiting as to the scope of the subject matter, which is to be given the full breadth of the appended claims, and any and all equivalents thereof.

## Claims

1. A multipowered electrolysis facility (2), comprising:
a power balance unit (6) that receives incoming power from a power source (4) and manages electron flow (8) from the power source (4);
a first electrolysis unit (10) utilizing PEM electrolysis that receives the managed electron flow (8) from the power balance unit (6), and is individually attuned and cooperatively integrated to operate at a first power range of 10-500 MW;
a second electrolysis unit (12) that receives the managed electron flow (8) from the power balance unit (6), and is individually attuned and cooperatively integrated to operate at a second power range of 10-500 MW; and
a cooling/heating unit (20) operatively connected to the electrolysis units (10, 12) to provide coolant/heated flow from the cooling/heating unit (20) to the electrolysis units (10, 12) for efficient electrolysis within the electrolysis units (10, 12), and
a fluid purification unit (30) operatively connected to the electrolysis units (10, 12) to provide purified fluid flow from the purification unit (30) to the electrolysis units (10, 12) for efficient electrolysis within the electrolysis units (10, 12),
whereby the electrolysis units (10, 12) produce hydrogen (40) and oxygen (42) that each may be made use of, stored, transported, discarded or otherwise employed.

2. The multipowered electrolysis facility of claim 1, wherein the second electrolysis unit (12) utilizes pressurized alkaline electrolysis, PEM electrolysis, ambient alkaline electrolysis or anion exchange membrane electrolysis.

3. The multipowered electrolysis facility of claim 2, wherein the second electrolysis unit (12) utilizes alkaline electrolysis.

4. The multipowered electrolysis facility of claim 2, wherein the first electrolysis unit (10) operates at a first power range of 35 - 250 MW and the second electrolysis unit (12) operates at a second power range of 35 - 250 MW.

5. The multipowered electrolysis facility of claim 2, further comprising an additional electrolysis unit (14) that receives the managed electron flow (8) from the power balance unit (6), and is individually attuned and cooperatively integrated to operate at a third power range of 10-500 MW.

6. The multipowered electrolysis facility of claim 1, further comprising an additional electrolysis unit (14) that receives the managed electron flow (8) from the power balance unit (6) and is individually attuned and cooperatively integrated to operate at a third power range of 1-10 MW.

7. The multipowered electrolysis facility of claim 1, further comprising an additional electrolysis unit (14) that receives the managed electron flow (8) from the power balance unit (6) and is individually attuned and cooperatively integrated to operate at a third power range of 500-1000 MW.

8. The multipowered electrolysis facility of claim 1, further comprising an additional power balance unit (50) that receives incoming power from the power source (4) and manages the electron flow (8) from the power source, and distributes the managed electron flow (8) to one electrolysis unit (10, 12) while the power balance unit (50) distributes the managed electron flow (8) to the other electrolysis unit (10, 12).
